# EUROPÄISCHE PATENTSCHRIFT

(11) **EP 1 184 599 B1**
(45) Veröffentlichungstag und Bekanntmachung des Hinweises auf die Patenterteilung: **25.02.2009**
(21) Anmeldenummer: 01106408.6
(22) Anmeldetag: 21.03.2001
(51) Int. Cl.: F16H 45/02, F16H 61/14, F16D 33/16

(54) **Verfahren zur Anpassung von Anfahreinheiten an Antriebssysteme mit unterschiedlichen Randbedingungen, insbesondere unterschiedliche Antriebsmaschinen**
Method for adaptung of starting units to drive systems with differing boundary conditions, in particular for differing prime movers
Procédé d'adaption des unités de démarrage aux systèmes d'entraînement avec des conditions de bordure différentes, notamment pour des moteurs d'entraînement différents

(30) Priorität: 31.08.2000 DE 10043146; 02.03.2001 DE 10110077
(43) Veröffentlichungstag der Anmeldung: 06.03.2002
(73) Patentinhaber: Voith Turbo GmbH & Co. KG, 89522 Heidenheim (DE)
(72) Erfinder: Höller, Heinz, 74564 Crailsheim (DE); Dr. Kernchen, Reinhard, 74589 Satteldorf (DE); Dr. Menne, Achim, 74564 Crailsheim (DE); Prof. Klement, Werner, 89520 Heidenheim (DE)
(74) Vertreter: Dr. Weitzel & Partner

(56) Entgegenhaltungen:
- US-A- 2 731 119
- US-A- 5 190 130
- US-A- 5 697 866
- US-A- 5 771 998
- US-A- 5 813 505
- PATENT ABSTRACTS OF JAPAN vol. 013, no. 514 (M-894), 17. November 1989 (1989-11-17) & JP 01 208238 A (TOYOTA MOTOR CORP), 22. August 1989 (1989-08-22)
- PATENT ABSTRACTS OF JAPAN vol. 1996, no. 10, 31. Oktober 1996 (1996-10-31) & JP 08 159274 A (DAIHATSU MOTOR CO LTD), 21. Juni 1996 (1996-06-21)
- PATENT ABSTRACTS OF JAPAN vol. 2000, no. 12, 3. Januar 2001 (2001-01-03) & JP 2000 266160 A (ISUZU MOTORS LTD), 26. September 2000 (2000-09-26)
- PATENT ABSTRACTS OF JAPAN vol. 2000, no. 10, 17. November 2000 (2000-11-17) & JP 2000 193083 A (TOYOTA MOTOR CORP), 14. Juli 2000 (2000-07-14)

## Beschreibung

Die Erfindung betrifft ein Verfahren zur Anpassung einer Anfahreinheit an Antriebssysteme mit unterschiedlichen Randbedingungen, insbesondere unterschiedlichen Antriebsmaschinen.

Anfahreinheiten für den Einsatz in Schaltgetrieben, automatisierten Schaltgetrieben oder Automatgetrieben sind in einer Vielzahl von Ausführungen bekannt. Diese umfassen in der Regel ein hydrodynamisches Bauelement in Form eines hydrodynamischen Drehzahl/Drehmomentwandlers oder einer hydrodynamischen Kupplung. Bezüglich einer möglichen Ausführung einer Anfahreinheit für den Einsatz in Getrieben mit einer hydrodynamischen Kupplung wird auf die Druckschrift DE 198 04 635 A1 verwiesen. Diese offenbart eine Ausführung einer Anfahreinheit mit geringer axialer Baulänge, umfassend ein Pumpenrad und ein Turbinenrad, die miteinander einen torusförmigen Arbeitsraum bilden, wobei das Pumpenrad auf der Motorabtriebsseite angeordnet ist, d. h. das Turbinenrad ist räumlich zwischen einem Eingang der Anfahreinheit und dem Pumpenrad angeordnet. Das Pumpenrad ist zu diesem Zweck drehfest über ein Element, welches gleichzeitig die Pumpenradschale bildet, mit dem Eingang bzw. mit einem mit diesem gekoppelten Antrieb drehfest verbunden. Es ist eine Überbrückungskupplung vorgesehen, welche parallel zur hydrodynamischen Kupplung geschaltet ist. Diese ermöglicht eine Leistungsübertragung vom Eingang der Anfahreinheit zum Ausgang unter Umgehung des hydrodynamischen Bauelementes. Die Überbrückungskupplung ist dabei als separates Bauelement neben der Einheit aus Pumpenrad und Turbinenrad angeordnet. Des weiteren umfaßt die Anfahreinheit eine Vorrichtung zur Dämpfung von Schwingungen, welche in einem Durchmesserbereich angeordnet ist, der oberhalb der radial äußeren Abmessung des torusförmigen Arbeitsraumes der hydrodynamischen Kupplung angeordnet ist und Bestandteil der Überbrückungskupplung ist bzw. ein Kupplungselement bildet. Anders ausgedrückt ist die Vorrichtung zur Dämpfung von Schwingungen im wesentlichen im Bereich einer Ebene oder geringfügig versetzt zueinander mit der hydrodynamischen Kupplung angeordnet. Diese Lösung baut zwar schon relativ kurz, erfüllt jedoch hinsichtlich der erforderlichen axialen Baulänge nicht die Erfordernisse bestimmter vorgegebener Einbausituationen. Des weiteren ist diese Ausführung aufgrund der Vielzahl von Funktionselementen durch eine hohe Bauteilanzahl sowie einen enormen Montageaufwand charakterisiert. Die Größe der Anfahreinheit wird desweiteren auch durch die erforderliche Auslegung dieser im Zusammenwirken mit einer Antriebsmaschine und den nachgeordneten Schaltstufen beim Einsatz in Antriebssystemen bestimmt. Insbesondere erfordert eine Änderung der Antriebsmschine eine Änderung der Auslegung der Anfahreinheit.

Zum weiteren Stand der Technik wird auf die folgenden Dokumente verwiesen:
US5771998-A;
US5813505-A;
JP1208238-A, aus der ein Verfahren mit den Merkmale des Oberbegriffes des Anspruchs 1 bekannt ist;
JP8159274-A;

Der Erfindung liegt die Aufgabe zugrunde, eine Anfahreinheit der eingangs genannten Art, umfassend eine hydrodynamische Kupplung und eine Überbrückungskupplung, welche parallel geschaltet werden können, sowie deren Einzelelemente derart weiterzuentwicklen und ein Verfahren zur Anpassung derselben anzugeben, daß diese universeller für eine Mehrzahl von Antriebssträngen mit unterschiedlichen Randbedingungen, beispielsweise Antriebsmaschinen unterschiedlicher Leistung, ohne Änderungen in der konstruktiven Auslegung einsetzbar sind. Desweiteren soll die Anfahreinheit durch einen sehr geringen Bauraumbedarf in axialer Richtung, eine geringe Bauteilanzahl und die Zusammenfassung von Funktionselementen charakterisiert sein. Der konstruktive Aufwand ist gering zu halten.

Die erfindungsgemäße Lösung der Aufgabe ist durch die Merkmale von Anspruch 1 charakterisiert. Vorteilhafte Ausgestaltungen sind in dem Unteransprüch beschrieben.

Eine Anfahreinheit mit einem mit einem Antrieb koppelbaren Eingang und einem mit dem Abtrieb koppelbaren Ausgang umfaßt ein Anfahrelement in Form einer hydrodynamischen Kupplung und eine schaltbare Kupplung, umfassend wenigstens zwei miteinander direkt oder indirekt über weitere Übertragungsmittel reibschlüssig in Wirkverbindung bringbare Kupplungselemente- ein erstes Kupplungselement und ein zweites Kupplungselement, die jeweils mit dem Eingang und dem Ausgang drehfest gekoppelt sind. Erfindungsgemäß sind hydrodynamische Kupplung und schaltbare Kupplung parallel angeordnet und gemeinsam oder jeweils für sich allein schaltbar. Parallele Anordnung bedeutet, daß diese in zwei unterschiedlichen Leistungszweigen zwischen Antrieb und Abtrieb angeordnet sind.

Die erfindungsgemäße Lösung ermöglicht es, die übertragbare Leistung gegebenenfalls auf zwei Leistungszweige aufzuteilen und am Ausgang wieder zusammenzuführen. Die mögliche Übertragung entweder nur über einen Zweig oder über beide Zweige bietet den Vorteil, daß die Anfahreinheit mit den einzelnen Bauelemente ohne Änderung der Auslegung in unterschiedlichen Antriebssystemen zum Einsatz gelangen kann und optimal an die Randbedingungen des jeweiligen Einsatzfalles anpaßbar ist. Da gemäß einer besonders vorteilhaften Weiterentwicklung die einzelnen Leistungsanteile frei, d.h. unabhängig voneinander steuerbar bzw. einstellbar sind, besteht zusätzlich die Möglichkeit, unterschiedliche Anfahrcharakteristiken zu erzeugen.

Bezüglich der Leistungsübertragung können durch die Schaltbarkeit die folgenden drei Grundfunktionszustände beschrieben werden:
- ein erster Grundfunktionszustand, der durch die alleinige Leistungsübertragung über die hydrodynamische Kupplung, d.h. über den ersten Leistungszweig charakterisiert ist,
- ein zweiter Grundfunktionszustand, der durch die alleinige Leistungsübertragung durch die schaltbare Kupplung, d.h. über den zweiten Leistungszweig charakterisiert ist und
- ein dritter Grundfunktionszustand, der durch die gemeinsame Leistungsübertragung über die hydrodynamische und die schaltbare Kupplung und damit beide Leistungszweige charakterisiert ist.

Im zweiten Grundfunktionszustand fungiert die schaltbare Kupplung als Überbrückungskupplung. Im dritten Grundfunktionszustand sind beide Kupplungen in Betrieb. Die Leistungsaufnahme der hydrodynamischen Kupplung wird durch den Füllungsrad gesteuert, während die Leistungsaufnahme der schaltbaren Kupplung durch die Anpreßkraft einstellbar ist. Beide Kupplungen sind separat, d.h. unabhängig voneinander steuerbar.

Im ersten Grundfunktionszustand ist die hydrodynamsiche Kupplung geschaltet. In diesem wird die am Eingang E anliegende Leistung nur über die hydrodynamische Kupplung übertragen. Die schaltbare Kupplung ist deaktiviert. Zusätzlich besteht jedoch die Möglichkeit, das Übertragungsverhalten der hydrodynamischen Kupplung zu beeinflussen. Dies geschieht über die Veränderung des Füllungsgrades. Dabei bewirkt ein steigender Füllungsgrad bei konstanter Drehzahl einen höheren Druck pₖ im Arbeitsraum der hydrodynamischen Kupplung und umgekehrt. Im zweiten Grundfunktionszustand ist die schaltbare Kupplung geschaltet. In diesem wird die am Eingang E anliegende Leistung nur über diese übertragen. Die hydrodynamische Kupplung ist deaktiviert. Zusätzlich kann bei Vorliegen bestimmter konstruktiver Voraussetzungen noch die Möglichkeit bestehen, auch das Übertragurigsverhalten der schaltbaren Kupplung zu beeinflussen. Dies geschieht über die Veränderung des Anpreßdruckes, so daß die Kupplung mit Schlupf betrieben wird.

Im dritten Grundfunktionszustand sind beide Leistungszweige aktiviert, d.h. es wird ein erster Leistungsanteil über die hydrodynamische Kupplung übertragen und ein zweiter Leistungsanteil über die schaltbare Kupplung. Zusätzlich können die einzelnen Leistungsanteile unabhängig voneinander gesteuert werden. Der dritte Grundzustand kann zeitlich von kurzzeitiger gemeinsamer Aktivierung bis Aktivierung über einen Hauptteil des Anfahrbereiches dauern.

Der entscheidende Vorteil dieser Lösung, insbesondere der Leistungsaufteilung und freien Steuerbarkeit der über die einzelnen Komponenten übertragbaren Leistungsanteile besteht zum einen in einer lediglich steuerungstechnisch vorzunehmenden Anpassung an unterschiedliche Randbedingungen, beispielsweise eine andere Antriebsmaschine, d.h. ohne vorzunehmende bauliche Veränderungen. Des weiteren können mit dieser Steuermöglichkeit unterschiedliche Anfahrcharakteristiken frei eingestellt werden. Diese freie Einstellbarkeit wird beispielsweise über entsprechende Algorithmen, welche über eine Steuerung vorgegeben oder vorgebbar sind, gewährleistet.

Dabei kann die Leistungsaufteilung über
a) eine, jedem Übertragungselement - hydrodynamische Kupplung und schaltbare Kupplung - zugeordnete und separat ansteuerbare Stelleinrichtung, beispielsweise in Form eines Betriebsmittel- oder Steuermittelbereitstellungssystems mit den entsprechenden Beeinflussungsmitteln, beispielsweise Ventilen oder
b) eine, jedem Übertragungselement zugeordnete und separat ansteuerbare Stelleinrichtung zur Beaufschlagung des einzelnen Übertragungselementes mit dem entsprechenden Anpreßdruck oder einem bestimmten Füllungsgrad aus einem gemeinsam nutzbaren Betriebsmittel- und/oder Steuermittelvorrat oder
c) eine gemeinsame Stelleinrichtung, die einem gemeinsam nutzbaren Betriebsmittel- oder Steuermittelversorgungssystem zugeordnet ist,
erfolgen.

Gemäß einer besonders vorteilhaften und in axialer Richtung kurz bauenden Ausgestaltung erfolgt die Schaltbarkeit und Einstellbarkeit der übertragbaren Leistungsanteile über ein gemeinsam nutzbares Drucksteuersteuersystem, welches einen gemeinsame Betriebsmittel-und/oder Steuermittelvorrat nutzt. Konstruktive Voraussetzung für eine besonders kompakte Anfahreinheit ist die Ausgestaltung der hydrodynamischen Kupplung mit einer drehfest mit dem Pumpenrad gekoppelten Pumpenradschale, welche das Turbinenrad in axialer Richtung unter direkter Bildung eines ersten Betriebsmittel-Führungskanales-oder Raumes umschließt. Des weiteren ist ein zweiter Betriebsmittelführungskanal- oder bei Vorhandensein einer Zwischenwand unter Bildung des ersten Betriebsmittelführungskanales oder Raumes zwischen Pumpenradschale und Zwischenwand vorgesehen, welcher im Bereich des Innendurchmessers des torusförmigen Arbeitsraumes oder unterhalb dessen mündet. Der erste und zweite Betriebsmittelführungskanal- oder Raum sind wahlweise jeweils als Zufuhr-oder Ablaufkanal- oder Raum zum torusförmigen Arbeitsraum nutzbar. Durch diese wahlweise Änderung der Funktion der einzelnen Betriebsmittelführungskanäle-bzw. Räume kann die Durchströmungsrichtung der hydrodynamischen Kupplung auf einfache Art und Weise zwischen zentripedal und zentrifugal geändert werden. Um eine Zuführung des Betriebsmittels bei zentripedaler Durchströmung, d.h. Durchströmung der hydrodynamischen Kupplung über den ersten Betriebsmittelführungskanal - oder Raum zum radial äußeren Bereich des torusförmigen Arbeitsraumes im Bereich der Trennebene.zwischen Pumpen- und Turbinenrad und von dort in den sich im torusförmigen Arbeitsraum bildenden Arbeitskreislauf zu gewährleisten, ist es erforderlich, Pumpenrad und Turbinenrad in entsprechender Art und Weise zueinander anzuordnen und einen Spalt zwischen ihnen so zu gestalten, daß der so gebildete Eintrittswinkel immer eine Zufuhr in die Meridianströmung des Arbeitskreislaufes bewirkt und nicht abströmend wirkt. Dazu sind Pumpenrad und Turbinenrad in radialer Richtung vorzugsweise mit Versatz ausgeführt.

Zur Gewährleistung einer sicheren Funktionsweise sind beide Betriebsmittelführungskanäle- oder Räume gegeneinander abgedichtet.

Das der hydrodynamischen Kupplung zugeordnete Betriebsmittelversorgungs- und -führungssystem umfaßt eine Betriebsmittelversorgungsquelle - bzw. einen Vorrat und einen ersten Anschluß zur Kopplung mit dem ersten Betriebsmittelführungskanal-oder Raum sowie einen zweiten Anschluß zur Kopplung mit dem zweiten Betriebsmittelführungskanal-oder Raum. Mittel zur wahlweisen Änderung der Durchströmungsrichtung der hydrodynamischen Kupplung sind durch Zuweisung der Funktion des Zulaufes oder des Ablaufes zu den beiden Betriebsmittelversorgungskanälen -oder Räumen vorgesehen. Der Begriff Anschluß ist dabei nicht nur als konstruktives Bauelementzu verstehen, sondern ist hinsichtlich seiner Funktion als funktionales Element zu betrachten. Gemeint ist, dabei die Gestaltung bzw. Realisierung des Überganges zwischen den Betriebsmittelführungskanälen-oder Räumen der hydrodynamischen Kupplung und den Verbindungsleitungen - Speiseleitung und Rücklaufleitung e.t.c. - zur Betriebsmittelquelle. Dabei können einzelne Elemente des Betriebsmittelversorgungssystems auch Bestandteil der hydrodynamischen Kupplung sein oder nicht. Dies gilt insbesondere für die Mittel zur wahlweisen Änderung der Durchströmungsrichtung der hydrodynamischen Kupplung durch Zuweisung der Funktion des Zulaufes oder des Ablaufes zu den beiden Betriebsmittelversorgungskanälen -oder Räumen und/oder Teile der Verbindungsleitungen zwischen Betriebsmittelversorgungsquelle und den Betriebsmittelführungskanälen oder Räumen. Mit diesem Betriebsmittelversorgungssystem einer hydrodynamischen Kupplung kann die Durchströmungsrichtung einer hydrodynamischen Kupplung auf einfache Art und Weise ohne zusätzliche bauliche Modifikationen geändert werden.

Bezüglich der Ausgestaltung des Betriebsmittelversorgungssystems bestehen mehrere Möglichkeiten. Die konkrete Ausführung erfolgt entsprechend den Erfordernissen des Einsatzfalles und liegt im Ermessen des zuständigen Fachmannes.

In einer besonders einfachen Ausgestaltung umfassen die Mittel eine Ventileinrichtung mit wenigstens zwei Schaltstellungen. Eine erste Schaltstellung ist dabei durch die Kopplung zwischen Zulauf, d. h. Speiseleitung und erstem Betriebsmittelführungskanal-oder Raum und Ablauf, d. h. Rücklaufleitung und zweitem Betriebsmittelführungskanal- oder Raum und die zweite Schaltstellung durch die Kopplung zwischen Zulauf und zweitem Betriebsmittelführungskanal-oder Raum und Ablauf und erstem Betriebsmittelführungskanal- oder Raum charakterisiert. Beide Betriebsmittelführungskanäle - oder Räume sind vorzugsweise über einen offenen Kreislauf miteinander gekoppelt. Der offene Kreislauf beinhaltet die Betriebsmittelversorgungsquelle, welche auch als Betriebsmittelspeicher fungiert, und eine Kopplung dieser über die Speise- und Rücklaufleitung mit den Betriebsmittelführungskanälen- oder Räumen in der hydrodynamischen Kupplung. Die Ventileinrichtung ist lediglich zwischengeschaltet. Mit dieser Konfiguration kann auch im Dauerbetrieb der Übertragungselemente, insbesondere der hydrodynamischen Kupplung ein Kühlkreislauf zwischen Austritt aus dem Arbeitsraum und Eintritt über den Betriebsmittelspeicher aufrechterhalten werden.

Zur Änderung der Leistungsaufnahme der hydrodynamischen Kupplung ist unter einem weiteren Aspekt der Erfindung der Füllungsgrad veränderbar. Um zusätzlich die gewünschte aufzunehmende Leistung der hydrodynamischen Kupplung zu steuern oder zu regeln, ist der Füllungsgrad steuer- oder regelbar. Diese Steuer- und/oder Regelbarkeit kann auf unterschiedliche Art und Weise realisiert werden. Im einfachsten Fall erfolgt dies durch Vorsehen eines entsprechenden Druckregelventiles in der Zulauf- bzw. Speiseleitung und/oder der Rücklaufleitung. Diese freie Einstellbarkeit ermöglicht es, hinsichtlich unterschiedlicher Kriterien, beispielsweise Energieverbrauch und Schadstoffemission, optimierte Betriebspunkte im Kennfeld der Antriebsmaschine anzusteuern, ohne hierfür die konstruktive Ausgestaltung und Auslegung der Kupplung verändern zu müssen.

Gemäß einer vorteilhaften Weiterentwicklung besteht die Möglichkeit, die einzelnen Betriebsmittelführungskanäle oder Räume über einen ebenfalls offenen Kreislauf miteinander zu koppeln und jedem Betriebsmittelführungskanal oder Raum eine steuerbare Ventileinrichtung, die miteinander über eine Verbindungsleitung gekoppelt sind, zuzuordnen, wobei über die Vorgabe der in den Betriebsmittelkanälen bzw. Räumen einzustellenden Druckwerte sowohl die Strömungsrichtung und die übertragbare Leistung in der hydrodynamischen Kupplung festgelegt werden kann. Die Anbindung an die Betriebsmittelquelle - bzw. den Speicher erfolgt über entsprechende Leitungen zwischen Verbindungsleitung und Betriebsmittelspeicher.

Die schaltbare Kupplung umfaßt mindestens ein erstes Kupplungselement in Form einer ersten Kupplungsscheibe und ein zweites Kupplungselement in Form einer zweiten Kupplungsscheibe, die miteinander wenigstens mittelbar, d. h. entweder direkt oder indirekt über weitere Kupplungsscheiben reibschlüssig miteinander in Wirkverbindung bringbar sind. Dabei ist eine Integration von Bestandteilen der schaltbaren Kupplung im hydrodynamischen Bauelement vorgesehen. Diese wird dadurch realisiert, daß ein Kupplungselement, in der Regel eine erste Kupplungsscheibe drehfest mit dem Eingang, insbesondere der Primärradschale verbunden ist, während die andere zweite Kupplungsscheibe drehfest mit dem Ausgang, vorzugsweise direkt dem Turbinenrad verbunden ist. Eine andere Möglichkeit, insbesondere mit einer ungeraden Anzahl an Reibflächen, besteht im Vorsehen einer, einen Kolben bildenden, drehfest mit dem Turbinenrad jedoch gegenüber diesem axial verschiebbar angeordneten Zwischenwand. Den Kupplungsscheiben sind Mittel zur Erzeugung einer Anpreßkraft und damit zur Erzeugung einer wenigstens mittelbaren reibschlüssigen Verbindung zwischen erster Kupplungsscheibe und zweiter Kupplungsscheibe zugeordnet. Diese Lösung ermöglicht durch Integration der einzelnen Elemente der Überbrückungskupplung in das Anfahrelement in Form der hydrodynamischen Kupplung eine Ausgestaltung einer Anfahreinheit mit sehr geringem Bauraumbedarf in axialer Richtung, da hier bereits ohnehin vorhandene Bauelemente gleichzeitig mit der Übernahme der Funktion des anderen Elementes betraut werden.

Die Mittel zur Erzeugung einer Anpreßkraft umfassen mindestens ein mit Druckmittel beaufschlagbares Kolbenelement. Dieses kann separat den Kupplungsscheiben zugeordnet werden. !n einer besonders kompakten und damit vorteilhaften Ausgestaltung wird jedoch das Turbinenrad oder eine mit diesem drehfest verbundene, jedoch axial verschiebbare Zwischenwand als Kolbenelement genutzt. Der Druckraum zur Beaufschlagung des Kolbenelementes wird vom Turbinenrad umschlossenen Teil des torusförmigen Arbeitsraumes gebildet. Bezüglich der konstruktiven Ausführung zur Übernahme der Funktion eines Elementes und des weiteren eines Elementes der Mittel zur Erzeugung einer Anpreßkraft durch das Turbinenrad bestehen im wesentlichen die nachfolgend genannten Möglichkeiten:
1. drehfeste Kopplung des Turbinenrades mit dem Ausgang der Anfahreinheit jedoch axiale Verschiebbarkeit des Turbinenrades;
2. drehfeste Verbindung des Turbinenrades mit dem Ausgang der Anfahreinheit und in axialer Richtung elastische Ausführung der Kopplung zwischen Turbinenrad und Ausgang.

Im erstgenannten Fall wird die reibschlüssige Verbindung zwischen dem ersten Kupplungselement und dem zweiten, drehfest mit dem Turbinenrad verbundenen Kupplungselement durch die Verschiebung des Turbinenrades gewährleistet, während im zweiten Fall lediglich eine reversible Verformung der Verbindung zwischen Turbinenrad und Ausgang der Anfahreinheit die Anpreßung ermöglicht. Die axiale Verschiebbarkeit des Turbinenrades erfolgt dabei in einem Bereich von 0,1 bis 2 mm.

Um eine nahezu selbsttätige Überbrückung und des weiteren eine sichere Betriebsweise bei Leistungsübertragung über das hydrodynamische Kupplungselement zu realisieren bedarf es bei axialer Verschiebbarkeit des Turbinenrades einer entsprechenden Gegenkraft, welche das Turbinenrad in seiner Lage gegenüber dem Pumpenschaufelrad fixiert. Diese Gegenkraft wird von zum Arbeitsraum zugeführtem Betriebsmittel erzeugt, welches entlang des Außenumfanges des Turbinenrades zwischen den einzelnen Kupplungsscheiben der Überbrückungskupplung in den Bereich der Trennebene zwischen Pumpenrad und Turbinenrad im Bereich des äußeren Durchmessers des torusförmigen Arbeitsraumes geführt wird und von dort in das Pumpenrad eingebracht wird und die hydrodynamische Kupplung zentripedal durchströmt. Üblicherweise liegen beide Kupplungsscheiben der schaltbaren Kupplung nahe aufeinander. Der dabei verbleibende Spalt dient als Drosselstelle für das durchströmende Betriebsmittel. Durch diese Drossel stellt sich eine Druckdifferenz zwischen den Kolbenflächen ein, aus der die erforderliche Anpreßkraft für das Öffnen und Schließen für die Überbrückungskupplung resultiert. Diese wird im einfachsten Fall bei Ausführungen mit drehfester Verbindung und axialer Verschiebbarkeit durch Vorspannung des Turbinenrades realisiert, beispielsweise mittels mindestens einer Federeinrichtung, welche das Turbinenrad und damit die mit dieser verbundene Kupplungsscheibe in einem minimalen Abstand von ca. 1 oder mehreren 10-teln zur anderen ersten Kupplungsscheibe oder weiteren dazwischen angeordneten Scheibenelementen in seiner Lage fixiert. Dies ist in Analogie auch bei der in axialer Richtung erfolgenden elastischen Anbindung des Turbinenrades an den Ausgang möglich. Bei Umschaltung vom hydrodynamischen Betrieb auf mechanischen Durchtrieb wird lediglich die Betriebsmittelzuführung hinsichtlich ihrer Richtung geändert, d. h. nicht mehr um den Außenumfang des Turbinenrades herum, sondern die Durchströmung der hydrodynamischen Kupplung erfolgt zentrifugal. Das Kräftegleichgewicht der zwischen den Kupplungsscheiben durch das Betriebsmittel am Turbinenrad oder der mit diesem verbundenen und als Kolben fungierenden Zwischenwand und im torusförmigen Arbeitsraum wirkenden Kräfte verschiebt sich. Das Betriebsmittel wird nunmehr im Bereich des Innenumfanges dem torusförmigen Arbeitsraum zugeführt und die durch das Betriebsmittel am Turbinenrad bzw. der Zwischenwand erzeugte Druckkraft bewirkt eine Verschiebung oder Verkippung des Turbinenrades in Richtung vom Pumpenrad weg, wobei die mit dem Turbinenrad drehfest verbundene Kupplungsscheibe reibschlüssig mit der mit der Pumpenradschale gekoppelten Kupplungsscheibe in Wirkverbindung gebracht wird. Im reinen Kupplungsbetrieb der schaltbaren Kupplung wird dabei die gesamte Leistung über diese übertragen. Bei Schlupfbetrieb erfolgt die Übertragung des anderen Leistungsanteiles über die hydrodynamische Kupplung.

Bezüglich der räumlichen und konstruktiven Anbindung der ersten und zweiten Kupplungsscheibe an das Turbinenrad oder die Zwischenwand bzw. die Pumpenradschale bestehen eine Vielzahl von Möglichkeiten. Die räumliche Anordnung erfolgt in axialer Richtung betrachtet neben dem torusförmigen Arbeitsraum davor oder dahinter. Die Anordnung in radialer Richtung ist durch Außen- und Innenabmessungen gekennzeichnet, welche vorzugsweise im Bereich zwischen dem äußeren und dem inneren Durchmesser des torusfömigen Arbeitsraumes liegen. Vorzugsweise sind die Reibflächen, welche von den Kupplungsscheiben gebildet werden, parallel zur Trennebene zwischen dem Pumpenrad und dem Turbinenrad ausgerichtet. Fertigungstechnische Toleranzen sind ohne Probleme ausgleichbar.

Vorzugsweise erfolgt die drehfeste Kopplung bei Anbindung direkt aus dem Turbinenrad an der Rückseite des den Torus bildenden Teiles des Turbinenrades. Die drehfeste Verbindung der einzelnen Kupplungsscheiben mit dem Turbinenrad und dem Pumpenrad bzw. der Pumpenradschale kann ebenfalls auf unterschiedliche Art und Weise realisiert werden. Denkbar sind
a) die einteilige Ausführung von Kupplungsscheibe und Turbinenrad und/oder Kupplungsscheibe und Pumpenradschale;
b) Ausbildung der einzelnen Kupplungsscheiben als separate Bauelemente und drehfeste Kopplung über entsprechende Verbindungselemente mit dem Pumpenrad und/oder dem Turbinenrad.
In beiden Fällen kann die Reibfläche direkt von der Kupplungsscheibe, d. h. im erstgenannten Fall von der Außenseite des Turbinenrades und einer Innenfläche der Pumpenradschale und im zweiten Fall vom separaten Bauelement gebildet werden oder aber von einem, dem Außenumfang des Turbinenrades oder den einzelnen Kupplungsscheiben zugeordneten Reibbelag.

Unter einem weiteren besonders vorteilhaften Aspekt umfaßt die Anfahreinheit eine Vorrichtung zur Dämpfung von Schwingungen, insbesondere einen Torsionsschwingungsdämpfer. Bezüglich der Wirksamkeit in den einzelnen Leistungsübertragungsbereichen kann dieser unterschiedlich angeordnet sein. Denkbar ist die Zuordnung des Torsionsschwingungsdämpfers (TSD) zu
a) einem Leistungszweig oder
b) beiden Leistungszweigen - hydrodynamische Kupplung und schaltbare Kupplung gemeinsam.

Im ersten Fall ist der TSD im Leistungszweig der schaltbaren Kupplung zugeordnet und dieser in diesem Leistungszweig vor- oder nachgeordnet Im zweiten Fall ist der TSD den beiden Leistungszweigen in Reihe vor- und nachgeschaltet. Vorzugsweise ist dieser zum hydrodynamischen Bauelement in Form der hydrodynamischen Kupplung und zur Überbrükkungskupplung in Reihe angeordnet. Dies wird dadurch erzielt, daß die Vorrichtung zur Dämpfung von Schwingungen zwischen dem Turbinenrad und dem Ausgang angeordnet ist. Das bedeutet, daß das Turbinenrad mit dem Eingang der Vorrichtung zur Dämpfung von Schwingungen gekoppelt ist oder über die reibschlüssige Verbindung bei Überbrückung des hydrodynamischen Leistungszweiges der Eingang der Vorrichtung zur Dämpfung von Schwingungen mit dem Pumpenrad über die Pumpenradschale drehfest verbunden wird. Räumlich erfolgt die Anordnung der Vorrichtung zur Dämpfung von Schwingungen dabei in axialer Richtung betrachtet im wesentlichen im Bereich bzw. in einer Ebene mit dem hydrodynamischen Bauelement. In radialer Richtung ist die Vorrichtung zur Dämpfung von Schwingungen innerhalb des den Innenumfanges des den torusförmigen Arbeitsraum bildenden Teiles der hydrodynamischen Kupplung beschreibenden Durchmessers angeordnet. Mit dieser Ausführung wird neben einer besonders kurzen axialen Baulänge auch der in radialer Richtung zur Verfügung stehende Bauraum optimal ausgenutzt.

Bezüglich der Ausführung der Vorrichtung zur Dämpfung von Schwingungen bestehen keinerlei Restriktionen, d. h. jegliche Art von Schwingungsdämpfer ist denkbar. Zum Einsatz gelangen dabei beispielsweise Vorrichtungen zur Dämpfung von Schwingungen, welche lediglich auf Reibdämpfung basieren oder hydraulische Dämpfungseinrichtungen. Die Ausführung als hydraulische Dämpfungseinrichtung umfaßt neben einem Primärteil und einem Sekundärteil, welche drehfest miteinander zum Zwecke der Drehmomentenübertragung koppelbar sind, und in Umfangsrichtung gegeneinander um einen bestimmten Winkel verdrehbar sind, Mittel zur Feder- und/oder Dämpfungskopplung zwischen dem Primärteil und dem Sekundärteil. Die Mittel zur Dämpfungskopplung umfassen dabei mit Hydraulikflüssigkeit füllbare Kammern, in welche Schwingungen verlagert werden. Die Vorrichtung zur Dämpfung von Schwingungen muß dabei lediglich auf das Ausgangsmoment am Turbinenrad ausgelegt werden, weshalb die Vorrichtung zur Dämpfung von Schwingungen in radialer und axialer Richtung sehr klein baut und in der Regel keine Vergrößerung der durch das hydrodynamische Bauelement vorgegebenen Abmessungen der Anfahreinheit bewirkt.

Bezüglich der räumlichen Anordnung von Pumpenrad und Turbinenrad bezogen auf den Eingang und den Ausgang der Anfahreinheit bestehen im wesentlichen die zwei folgenden Möglichkeiten:
1. Anordnung des Pumpenrades in axialer Richtung zwischen dem Eingang der Anfahreinheit und dem Turbinenrad der hydrodynamischen Kupplung;
2. Anordnung des Turbinenrades der hydrodynamischen Kupplung in axialer Richtung zwischen dem Eingang der Anfahreinheit und dem Pumpenrad.

Vorzugsweise findet die letztgenannte Möglichkeit Anwendung, da in diesem Fall trotz geringem Bauraumes die Kollisionsmöglichkeiten der einzelnen Elemente optimal beherrscht werden können.

Die erfindungsgemäße Lösung und deren Weiterentwicklungen eignet sich insbesondere für den Einsatz in Automatgetrieben. Denkbar ist aber auch der Einsatz in automatisierten Schaltgetrieben. Die Anfahreinheit kann dabei als Baueinheit separat vormontiert handelbar sein. Die Verbindung mit dem Getriebe erfolgt dabei durch Integration im Getriebegehäuse oder Hintereinanderschaltung mit Schaltstufen oder stufenlosen Getriebeteilen, beispielsweise Zugmittelgetrieben oder Toroidalgetrieben, wobei in allen Fällen die Kopplung beispielsweise durch Aufstecken auf eine mit Nachschaltstufen oder stufenlosen Getriebeteilen koppelbare Welle realisiert werden kann.

Unter einem weiteren Aspekt ist die Anfahreinheit sowohl für den Einsatz in Antriebssträngen in stationären Anlagen als auch Fahrzeugen geeignet.

Die gestaltete Anfahreinheit ermöglicht ein Verfahren zur Anpassung dieser an Antriebsstränge mit unterschiedlichen Randbedingungen, ohne das die konstruktiven Gegebenheiten, insbesondere die Auslegung der einzelenen Komponenten geändert werden müssen. Erforderlich ist lediglich eine entsprechende Ansteuerung der Stelleinrichtungen der einzelnen Übertragungselemente - hydrodynamische Kupplung oder schaltbare Kupplung -. Das Verfahren ist dadurch gekennzeichnet, daß die Leistungsübertragung entweder wahlweise über die hydrodynamische Kupplung, die schaltbare Kupplung oder teilweise in einem ersten Leistungszweig über die hydrodynamische Kupplung und in einem zweiten Leistungszweig über die schaltbare Kupplung gemeinsam übertragen wird. Grundvoraussetzung für diese Möglichkeit ist lediglich die gemeinsame oder wahlweise separate Schaltbarkeit der einzelnen Übertragungselemente - hydrodynamische Kupplung oder schaltbare Kupplung. Allein mit dieser Möglichkeit, ohne zusätzliche Steuerungsmöglichkeiten hinsichtlich der Größe der übertragbaren Leistungsanteile kann bereits eine Aufteilung entsprechend der möglichen übertragbaren Leistungen über die einzelnen Elemente erfolgen. Eine Optimierung erfolgt über zusätzliche Steuer und/oder Regelungsmöglichkeiten.

Gemäß einer Weiterentwicklung ist die über den ersten Leistungszweig übertragbare Leistung steuer- und/oder regelbar. Zusätzlich oder unabhängig von dieser Möglichkeit kann die über die schaltbare Kupplung übertragbare Leistung ebenfalls steuer- und/oder regelbar sein. Die Steuer-und/oder Regelbarkeit der über die einzelnen Leistungszweige übertragbare Leistung kann in Abhängigkeit der Nutzung eines gemeinsamen oder von jeweils separaten Betriebsmittel- bzw. Steuermittelversorgungssystemen und entsprechenden Stelleinrichtungen entweder unabhängig voneinander oder gekoppelt erfolgen. Bei Verwendung des erfindungsgemäßen Verfahrens in einer Anfahreinheit mit Integration der schaltbaren Kupplung baulich in der Konstruktion der hydrodynamischen Kupplung, insbesondere einer Ausführung mit drehfester Kopplung eines ersten Kupplungselementes mit der Pumpenradschale und eines mit dem Abtrieb verbundenen zweiten Kupplungselementes mit dem Turbinenrad oder mit einem, mit diesem drehfest verbundenen Element unter Ausnutzung eines gemeinsam benutzbaren Drucksteuersystems, wird der über die hydrodynamische Kupplung übertragbare Leistungsanteil durch Steuerung des Absolutdruckes im torusförmigen Arbeitsraum und der über die schaltbare Kupplung übertragbare Leistungsanteil durch Steuerung des Differenzdruckes zwischen den beiden Betriebsmittelführungskanälen- oder Räumen eingesteuert. Als Stellgröße für die Steuerung des Absolutdruckes fungiert dabei entweder der Einlaßdruck, d. h. der Druck im Zulauf im torusförmigen Arbeitsraum oder vorzugsweise der Auslaßdruck. Stellegröße für die Steuerung des übertragbaren Leistungsanteiles über die schaltbare Kupplung ist der Differenzdruck zwischen Einlaß und Auslaß, d. h. Zulauf und Rücklauf.

Die erfindungsgemäße Lösung ist nachfolgend anhand von Figuren erläutert. Darin ist im einzelnen folgendes dargestellt:
- Figur 1: verdeutlicht in vereinfachter Darstellung das Grundprinzip des Aufbaus einer Anfahreinheit und eines Verfahrens zur Leistungsaufteilung;
- Figur 2a bis 2c: verdeutlichen die einzelnen möglichen Grundzustände der Leistungsübertragung über einzelne Leistungszweige;
- Figur 3a und 3b: verdeutlichen das Grundprinzip des Aufbaus einer gestalteten Anfahreinheit anhand einer besonders vorteilhaften Ausgestaltung;
- Figur 3c: verdeutlicht anhand eines Schemas das Grundprinzip der Drucksteuerung zur Realisierung der Leistungsaufteilung;
- Figuren 4a und 4b: verdeutlichen anhand von Diagrammen die Drucksteuerung der hydraulischen Komponente;
- Figur 5 und 6: verdeutlichen anhand von Diagrammen den zeitlichen Verlauf der Leistungsaufteilung während eines Anfahrvorganges;
- Figur 7: verdeutlicht eine vorteilhafte Ausgestaltung einer Anfahreinheit;
- Figur 8: verdeutlicht eine vorteilhafte Ausführung einer Anfahreinheit mit gegenüber den Ausführungen gemäß Figur 1a und 1b mit vertauschten Schaufelrädern.

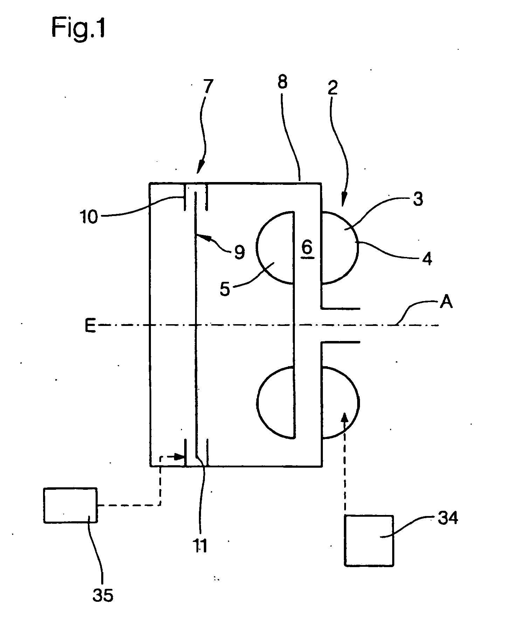

Figur 1 verdeutlicht in schematisierter vereinfachter Darstellung den Grundaufbau einer gestalteten Anfahreinheit 1. Die Anfahreinheit 1 umfaßt einen, mit einem Antrieb koppelbaren Eingang E und einen, mit nachgeschalteten Übersetzungsstufen oder einem Abtrieb koppelbaren Ausgang A. Die Anfahreinheit 1 umfaßt ein Anfahrelement 2 in Form einer hydrodynamischen Kupplung 3. Die hydrodynamische Kupplung 3 umfaßt zwei Schaufelräder, ein als Pumpenrad 4 fungierendes Primärrad und ein als Turbinenrad 5 fungierendes Sekundärrad, die miteinander einen Arbeitsraum 6 bilden, welcher in der Regel torusförmig ist. Die Anfahreinheit 1 umfaßt des weiteren eine parallel zum Anfahrelement 2 in Form der hydrodynamischen Kupplung 3 schaltbare Kupplung 7. Erfindungsgemäß sind hydrodynamische Kupplung 3 und schaltbare Kupplung 7 entweder jeweils separat oder aber gemeinsam schaltbar. Die hydrodynamische Kupplung 3 und die schaltbare Kupplung 7 sind somit in zwei unterschiedlichen Leistungszweigen angeordnet, einem ersten Leistungszweig 8 und einem zweiten Leistungszweig 9.

Die schaltbare Kupplung 7 umfaßt mindestens zwei miteinander reibschlüssig in Wirkverbindung bringbare Kupplungselemente, vorzugsweise in Form von Kupplungsscheiben, d.h. in Kraftflußrichtung zwischen dem Eingang E und dem Ausgang A der Anfahreinheit 1 betrachtet eine erste Kupplungsscheibe 10, welche auch als Kupplungseingangsscheibe bezeichnet werden kann und eine zweite Kupplungsscheibe 11, die als Kupplungsausgangsscheibe bezeichnet wird. Eine Wirkverbindung durch Reibschluß zwischen der ersten Kupplungsscheibe 10 und der zweiten Kupplungsscheibe 11 kann dabei direkt oder indirekt realisiert werden, im erstgenannten Fall wird die Reibpaarung von der ersten Kupplungsscheibe 10 und der zweiten Kupplungsscheibe 11 gebildet, während im zweiten Fall weitere Reibflächen tragende Elemente zwischengeschaltet werden.

Zum Zwecke der Leistungsaufteilung ist jedem Übertragungselement - hydrodynamische Kupplung 3 und schaltbare Kupplung 7 - eine eigene, hier lediglich als Blackbox angedeutete Stelleinrichtung 34 und 35 zugeordnet, welche die Schaltbarkeit gewährleistet. Die Schaltbarkeit der schaltbaren Kupplung 7 wird durch Erzeugung eines entsprechenden Anpreßdruckes gewährleistet. Die Schaltbarkeit der hydrodynamischen Kupplung 3 beispielsweise durch Befüllung und Entleerung. Die Steuerung der übertragbaren Leistungsanteile über den ersten und zweiten Leistungszweig 8 und 9 erfolgt durch Steuerung bzw. Variation der Anpreßkraft an der schaltbaren Kupplung 7 und Steuerung und/oder Regelung des Füllungsgrades der hydrodynamischen Kupplung 3.

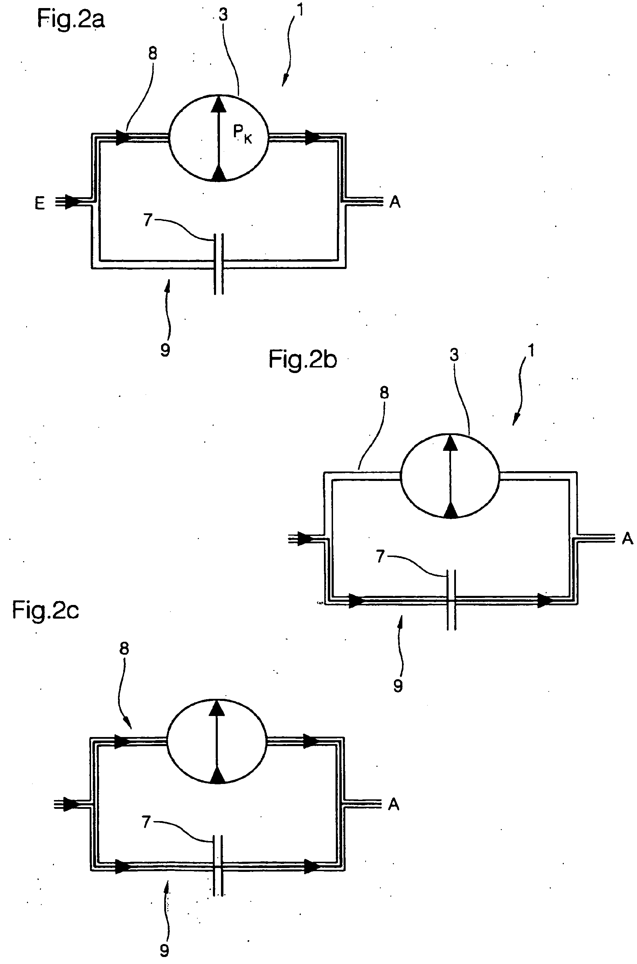

Die drei Grundzustände sind in schematisierter Darstellung in den Figuren 2a bis 2c verdeutlicht. Diese zeigen noch einmal die einzelnen Leistungszweige 8 und 9, die Zuordnung der einzelnen Elemente zu diesen und mittels Pfeillinie die Leistungsübertragung in den einzelnen Grundzuständen - erster Grundfunktionszustand Figur 2a, zweiter Grundfunktionszustand Figur 2b und dritter Grundfunktionszustand Figur 2c.

Im ersten Grundfunktionszustand ist die hydrodynamsiche Kupplung 3 geschaltet. In diesem wird die am Eingang E anliegende Leistung nur über die hydrodynamische Kupplung 3 übertragen. Die schaltbare Kupplung 7 ist deaktiviert. Zusätzlich besteht jedoch die Möglichkeit, das Übertragungsverhalten der hydrodynamischen Kupplung 3 zu beeinflussen. Dies geschieht über die Veränderung des Füllungsgrades. Dabei bewirkt ein steigender Füllungsgrad bei konstanter Drehzahl einen höheren Druck p_{K} im Arbeitsraum 6 der hydrodynamischen Kupplung 3 und umgekehrt.

Im zweiten Grundfunktionszustand ist die schaltbare Kupplung 7 geschaltet. In diesem wird die am Eingang E anliegende Leistung nur über diese übertragen. Die hydrodynamische Kupplung 3 ist deaktiviert. Dies geschieht über die Veränderung des Anpreßdruckes, so daß die Kupplung ohne Schlupf betrieben wird.

Im dritten Grundfunktionszustand sind beide Leistungszweige 8 und 9 aktiviert, d.h. es wird ein erster Leistungsanteil über die hydrodynamische Kupplung 3 übertragen und ein zweiter Leistungsanteil über die schaltbare Kupplung 7. Zusätzlich können unter einem weiteren Aspekt der Erfindung die einzelnen Leistungsanteile unabhängig voneinander gesteuert werden. Der dritte Grundfunktionszustand kann zeitlich von kurzzeitiger gemeinsamer Aktivierung bis Aktivierung über einen Hauptteil des Anfahrbereiches andauern.

Der entscheidende Vorteil dieser Lösung, insbesondere der Leistungsaufteilung und freien Steuerbarkeit der über die einzelnen Komponenten übertragbaren Leistungsanteile besteht zum einen in einer lediglich steuerungstechnisch vorzunehmenden Anpassung an unterschiedliche Randbedingungen, beispielsweise eine andere Antriebsmaschine, d.h. ohne vorzunehmende bauliche Veränderungen. Des weiteren können mit dieser Steuermöglichkeit unterschiedliche Anfahrcharakterisitiken frei eingestellt werden.

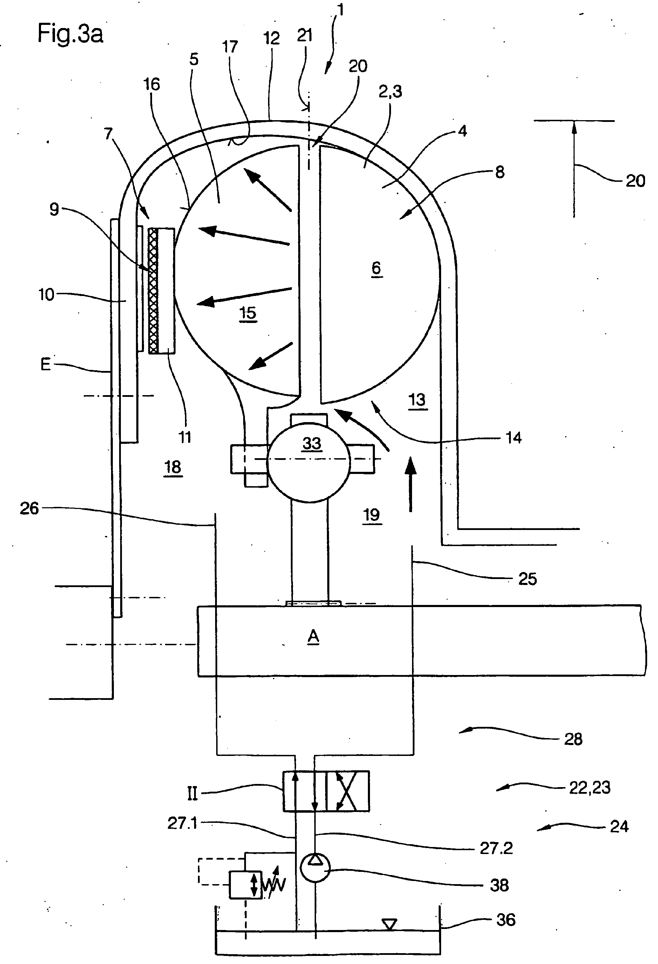

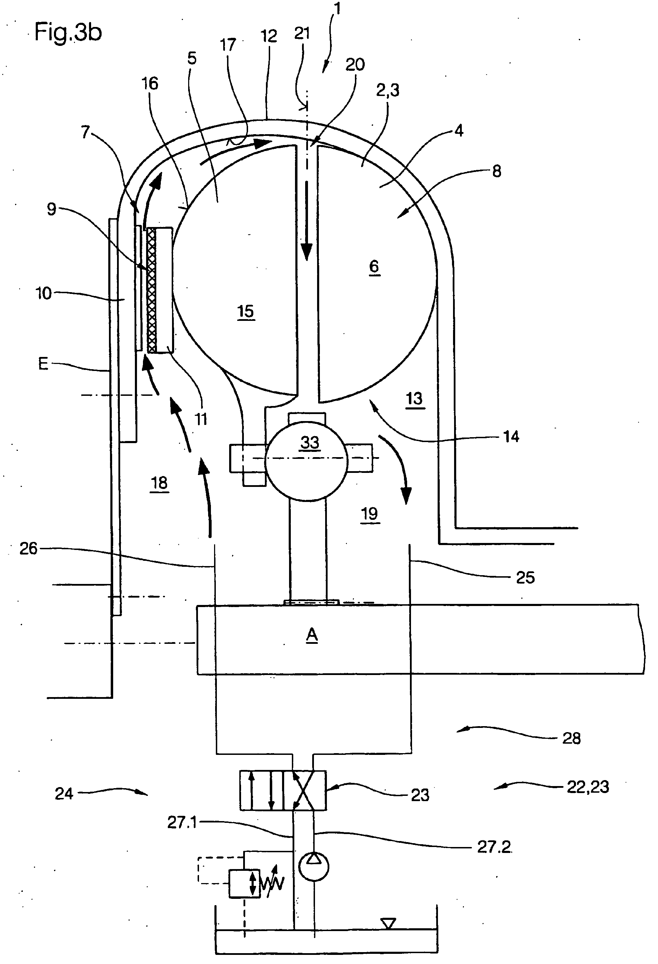

Als Stellgröße der Steuerung der Leistungsanteile fungiert in der Regel ein Druck. Beiden Kupplungen kann dazu eine separate Drucksteuerung zugeordnet sein, welche durch eine übergeordnete Steuerung miteinander verknüpft werden. Gemäß einer besonders vorteilhaften Ausgestaltung nutzen beide Systeme jedoch ein Drucksteuerungssystem, um den erforderlichen Bauraum und die Bauteilanzahl zu minimieren. Gemäß einer besonders vorteilhaften Ausgestaltung in den Figuren 3a und 3b umfaßt das Pumpenrad 4 dazu eine Pumpenradschale 12. Diese wird entweder von einem separaten Bauelement, welches drehfest mit dem Pumpenrad 4 gekoppelt ist, gebildet oder ist als integrale Baueinheit mit dem Pumpenrad 4 ausgeführt. Die Pumpenradschale 12 erstreckt sich dabei in Einbaulage in axialer Richtung im wesentlichen über die axiale Erstreckung des Turbinenrades 5 bzw. umschließt dieses zumindest teilweise auch in radialer Richtung. Vorzugsweise erfolgt das Umschließen des Turbinenrades 5 durch die Pumpenradschale 12 bzw. bei mehrteiliger Ausführung von deren Einzelteilen derart, daß diese sich in radialer Richtung bis in den Bereich des Ausganges A erstrecken. Das Turbinenrad 5 ist direkt oder indirekt, d. h. über weitere Übertragungselemente, mit dem Ausgang A der Anfahreinheit 1 verbunden. Der grundlegende Aufbau der Anfahreinheit 1 entspricht ansonsten dem in Figur 1 beschriebenen. Für gleiche Elemente werden daher die gleichen Bezugszeichen verwendet. Vorzugsweise ist, dabei die erste Kupplungsscheibe 10 drehfest mit dem Pumpenrad 4, insbesondere der Pumpenradschale 12 verbunden, während die zweite Kupplungsscheibe 11 drehfest mit dem Turbinenrad 5 gekoppelt ist. Vorzugsweise erfolgt des weiteren die Anordnung der schaltbaren Kupplung 7 in radialer Richtung im Bereich der radialen Erstreckung des torusförmigen Arbeitsraumes 6.

Bezüglich der Leistungsübertragung können durch die Schaltbarkeit die folgenden drei Grundbetriebszustände beschrieben werden:
- ein erster Grundfunktionszustand, der durch die alleinige Leistungsübertragung über die hydrodynamische Kupplung 3, d.h. über den ersten Leistungszweig 8 charakterisiert ist,
- ein zweiter Grundfunktionszustand, der durch die alleinige Leistungsübertragung durch die schaltbare Kupplung 7, d.h. über den zweiten Leistungszweig 9 charakterisiert ist und
- ein dritter Grundfunktionszustand, der durch die gemeinsame Leistungsübertragung über die hydrodynamische und die schaltbare Kupplung 3 bzw. 7 und damit beide Leistungszweige 8 und 9 charakterisiert ist.

Im zweiten Grundfunktionszustand fungiert die schaltbare Kupplung 7 als Überbrückungskupplung. Im dritten Grundfunktionszustand sind beide Kupplungen in Betrieb. Die Leistungsaufnahme der hydrodynamischen Kupplung 3 wird durch den Füllungsrad gesteuert, während die Leistungsaufnahme der schaltbaren Kupplung 7 durch die Anpreßkraft einstellbar ist. Beide Kupplungen sind separat, d.h. unabhängig voneinander steuerbar.

Bei der besonders kompakten Ausführung gemäß der Figuren 3a und 3b sind des weiteren Mittel 13 zur Erzeugung einer Anpreßkraft zur Realisierung einer reibschlüssigen Verbindung zwischen beiden Kupplungsscheiben, der Kupplungsscheibe 10 und zweiten Kupplungsscheibe 11, vorgesehen. Die Mittel 13 umfassen vorzugsweise ein mit Druckmittel beaufschlagbares Kolbenelement 14, wobei die Funktion des Kolbenelementes 14 vom Turbinenrad 5 übernommen wird. Das Turbinenrad 5 ist zu diesem Zweck entweder, wie in der Figur 3a angedeutet, drehfest mit dem Ausgang A verbunden, jedoch in axialer Richtung verschiebbar ausgeführt oder die Anbindung an den Ausgang A erfolgt direkt drehfest, in Umfangsrichtung drehsteif und in axialer Richtung elastisch. Bevorzugt wird jedoch eine Ausführung mit axialer Verschiebbarkeit.

Bei Vorsehen einer Rückführung sind die genannten Steuerungen auch als Regelungen betreibbar.

Um während des Betriebes die Funktionsweise der hydrodynamischen Kupplung 3 und damit die Leistungsübertragung über den sich im torusförmigen Arbeitsraum 6 einstellenden Arbeitskreislauf zu gewährleisten, erfolgt die Betriebsmittelzufuhr gemäß Figur 3b, welche einen Funktionszustand mit betätigter hydrodynamischer Kupplung 3 darstellt, zum Arbeitsraum 6 um den Außenumfang 13 des Turbinenrades 5 und damit zwischen den einzelnen Elementen der schaltbaren Kupplung 7, d. h. zumindest zwischen der ersten Kupplungsscheibe 10 und der zweiten Kupplungsscheibe 11. Die durch die Führung bei Zufuhr des Betriebsmittelstromes bedingte Gegenkraft ermöglicht während der alleinigen Leistungsübertragung in der hydrodynamischen Kupplung 3 eine axiale Fixierung des Turbinenrades 5. Entfällt diese Gegenkraft bzw. verringert sie sich durch Umlenkung bzw. Änderung der Zuführung des Betriesmittelstromes zum Arbeitsraum, bewirkt das Betriebsmittel im torusförmigen Arbeitsraum 6 aufgrund des sich im Arbeitsraum 6 aufbauenden Druckes eine Axialkraft, welche nicht vom Turbinenrad 5 abgestützt wird, sondern zu einer Verschiebung des Turbinenrades 5 in axialer Richtung führt. Dieser Zustand ist in Figur 3a dargestellt. Diese Verschiebung liegt dabei beispielsweise in einer Größenordnung zwischen 0,1 und 2 mm. Die Verschiebung bewirkt dabei ein reibschlüssig miteinander in Wirkverbindung bringen der beiden Kupplungsscheiben, der Kupplungsscheibe 10 und der zweiten Kupplungsscheibe 11, so daß das Turbinenrad 5 mechanisch an das Pumpenrad 4 gekoppelt wird, wobei das mit einer Druckkraft beaufschlagte Kolbenelement 14 in der hydrodynamischen Kupplung 3 integriert ist und zwar vom Turbinenrad 5 gebildet wird. Dabei übernimmt der die zweite Kupplungsscheibe 11 tragende Teil des Turbinenrades 5 die Funktion des Kolbenelementes 14 und das sich im torusförmigen Arbeitsraum 6 befindliche Betriebsmittel die Funktion der Druckbeaufschlagung, bei einem Kolbenelement 14 die Funktion einer Druckkammer 15. Entsprechend der Größe des Druckes wird über das Kolbenelement eine Anpreßkraft erzeugt, die die alleinige Leistungsübertragung über die schaltbare Kupplung 7 und damit die rein mechanische Übertragung ermöglicht, oder die schaltbare Kupplung wird mit Schlupf betrieben und nur ein Leistungsanteil über diese übertragen, während der andere Leistungsanteil über die hydrodynamische Kupplung 3 übertragen wird.

Bei der in den Figuren 3a und 3b dargestellten Ausführung der Anfahreinheit 1 handelt es sich um eine besonders vorteilhafte Anordnung der einzelnen Elemente - Pumpenrad 4 und Turbinenrad 5 - der hydrodynamischen Kupplung 3. Bei dieser sind in Kraftübertragungsrichtung zwischen dem Eingang E und dem Ausgang A der Anfahreinheit 1 das Pumpenrad 4 räumlich in axialer Richtung hinter dem Turbinenrad 5 bzw. neben diesem angeordnet, während das Turbinenrad 5 räumlich zwischen dem Eingang E und dem Pumpenrad 4 angeordnet ist. Aufgrund der Integration der Mittel 13 zur Erzeugung einer Anpreßkraft zur Realisierung einer reibschlüssigen Verbindung der einzelnen Elemente der schaltbaren Kupplung 7 in die hydrodynamische Kupplung 3 kann die Anzahl der erforderlichen Bauelemente auf ein Minimum reduziert werden, da keine zusätzliche separate Einrichtung zur Erzeugung bzw. Bereitsstellung der Anpreßkraft für die einzelnen Elemente, insbesondere erste Kupplungsscheibe 10 und zweite Kupplungsscheibe 11 der schaltbaren Kupplung 7 erforderlich ist. Ein weiterer Vorteil besteht aufgrund der integrierten Ausführung in der sehr kurzen axialen Baulänge. Diese kann bei optimierten Schaufelrädern mit der erfindungsgemäßen Lösung gegenüber den Ausführungen im Stand der Technik auch noch weiter verkürzt werden.

Erfindungsgemäß wird des weiteren die Leistungsaufteilung bzw. Leistungsübertragung in der Anfahreinheit durch die Betriebsmittelführung und die Drücke in den entsprechenden Anschlußleitungen bzw. Betriebsmittelführungskanälen- oder Räumen charakterisiert. Konstruktive Voraussetzung an der Anfahreinheit 1 ist, daß die Pumpenradschale 12 das Turbinenrad 5 derart umschließt, daß zwischen dem Außenumfang 16 des Turbinenrades und der Innenkontur 17 der Pumpenradschale 12 mindestens ein Betriebsmittelführungskanal - oder Raum 18 zur Führung von Betriebsmittel gebildet wird. Im einzelnen soll dieser es ermöglichen, Betriebsmittel zwischen Turbinenrad 5 und Pumpenradschale 6 im Bereich der radial äußeren Abmessungen 20 der hydrodynamischen Kupplung 3, insbesondere des Primärrades 4 und des Turbinenrades 5 im Bereich einer Trennebene 21 zwischen Pumpenrad 4 und Turbinenrad 5 von oben in Richtung des sich im torusförmigen Arbeitsraum 6 einstellenden Arbeitskreislaufes in diesen einzubringen und eine zentripedale Durchströmung zu gewährleisten. Des weiteren ist der hydrodynamischen Kupplung 1 mindestens ein Betriebsmittelführungskanal - oder Raum 19 zugeordnet, welcher eine Zufuhr des Betriebsmittels zum torusförmigen Arbeitsraum 6 in zentrifugaler Richtung ermöglicht. Bei dem Betriebsmittelführungskanal - oder Raum 19 kann es sich dabei um eine Leitung oder speziell in der Anschlußkonstruktion ausgebildete und eingearbeitete Kanäle handeln. Der Begriff Kanal ist hier hinsichtlich der Funktion zu betrachten und kann auch Innenräume oder kombinierte Kanal und Raumabschnitte mit einschließen. Insbesondere der mit 18 bezeichnete Betriebsmittelführungskanal - oder Raum liegt hier als ringförmiger Betriebsmittel-Führungsraum vor. Des weiteren wird jeder der Betriebsmittelführungskanäle 18 bzw. 19 derart gestaltet, daß diese neben der Zufuhr von Betriebsmittel zum torusförmigen Arbeitsraum 6 auch der Abfuhr dienen können, d.h. somit mit mindestens einem Eintritt und/oder einem Austritt aus dem torusförmigen Arbeitsraum 6 verbunden ist. Dabei ist es unerheblich, in welchem Bereich das Betriebsmittel aus dem torusförmigen Arbeitsraum 6 austritt. Die beiden Betriebsmittelführungskanäle- oder Räume 18 und 19 sind wahlweise als Zulauf oder Ablauf nutzbar, so daß auch die Durchströmungsrichtung geändert wird. Dazu sind Mittel zur wahlweisen Änderung der Durchströmungsrichtung der hydrodynamischen Kupplung 1 vorgesehen. Diese Mittel können auch als Durchströmungsrichtungsänderungsmittel 22 bezeichnet werden. Diese umfassen im einfachsten Fall eine Ventileinrichtung, welche die Funktion der beschriebenen Betriebsmittelkanäle bzw. Betriebsmittel-Führungsräume hinsichtlich ihrer Funktion Zulauf oder Ablauf vertauscht. Die Ventileinrichtung ist dabei im einfachsten Fall als Wegeventileinrichtung 23 ausgeführt. Dieses kann Bestandteil der Anfahreinheit 1 sein, es besteht jedoch auch die Möglichkeit, die Betriebsmittelführungskanäle - oder Räume 18 und 19 an ein Betriebsmittelversorgungssystem 24 zu binden, welches räumlich im wesentlichen außerhalb der Anfahreinheit 1 angeordnet ist. In diesem Fall kann die Ventileinrichtung 23 auch in einem Getriebe oder an beliebiger Stelle außerhalb der Anfahreinheit 1 angeordnet sein.

Die in Figur 3a dargestellte zweite Ventilstellung II der Ventileinrichtung 23 bewirkt, daß die hydrodynamische Kupplung 3 zentrifugal durchströmt wird. In diesem Fall wird im Bereich des Innenumfanges dem torusförmigen Arbeitsraum 6 Betriebsmittel über die Betriebsmittelführungskanäle oder Räume 19 zugeführt. In der in Figur 3b dargestellten ersten Schaltstellung des Wegeventils 23 erfolgt die Führung des Betriebsmittels über den Betriebsmittelführungskanal oder -Raum 18 am Außenumfang 16 des Turbinenrades 5 und von dort in den Bereich der Trennebene 21 im Bereich der radial äußeren Abmessung 20 der hydrodynamischen Kupplung 3, in den torusförmigen Arbeitsraum 6 hinein. Die hydrodynamische Kupplung wird bei Aufbau eines Kreislaufes dabei zentripedal durchströmt. Um eine sichere Funktionsweise zu gewährleisten und auch Möglichkeiten der Drucksteuerung nutzen zu können, sind beide Betriebsmittefführungskanäle - oder Räume gegeinander abgedichtet, d. h. druckdicht und flüssigkeitsdicht.

Das Betriebsmittelversorgungssystem 24 ist in den Figuren unabhängig von der tatsächlichen Integration bestimmter Teile in der Anfahreinheit 1 dieser zugeordnet dargestellt. Die einzelnen Anschlußleitungen 25 und 26 sind miteinander über entsprechende Verbindungsleitungen 27.1 und 27.2 mit einem Behälter 36 als Betriebsmittelquelle und Speichereinrichtung zu einem offenem System 28 verbunden. Die Verbindungsleitung 27.1 fungiert in Figur 3a als Rücklaufleitung, während 27.2 als Speiseleitung fungiert. Die Drucksteuerung kann über ein regelbares Druckbegrenzungsventil 29 in der Rücklaufleitung 27.1 erfolgen. In der Speiseleitung 27.2 ist eine Förderpumpe 38 angeordnet. Damit wird es möglich, die Leistungsübertragung gleichzeitig über die schaltbare Kupplung 7 und die hydrodynamische Kupplung 3 erfolgen zu lassen. Über den Differenzdruck zwischen den beiden Anschlüssen 25 und 26 wird dabei die Leistungsübertragung für die schaltbare Kupplung 7 direkt gesteuert und somit indirekt auch die Leistungsübertragung über den hydrodynamischen Zweig 8, d.h. die hydrodynamische Kupplung 3. Über den Absolutdruck in der hydrodynamischen Kupplung 3 kann die Leistungsübertragung über die diese verändert werden. In Figur 3a befindet sich die Ventileinrichtung 23 in der zweiten Schaltposition II. Diese ist dadurch charakterisiert, daß die Durchströmung zentrifugal erfolgt. Entsprechend der Größe der Anpreßkraft wird die schaltbare Kupplung 7 allein zur Leistungsübertragung genutzt oder aber gemeinsam - da mit Schlupf betrieben - mit der hydrodynamischen Kupplung 3. Die erste Schaltstellung 1 Gemäß Figur 3b ist dadurch gekennzeichnet, daß eine zentripedale Durchströmung und alleinige Leistungsüberragung über die hydrodynamische Kupplung vorliegt.

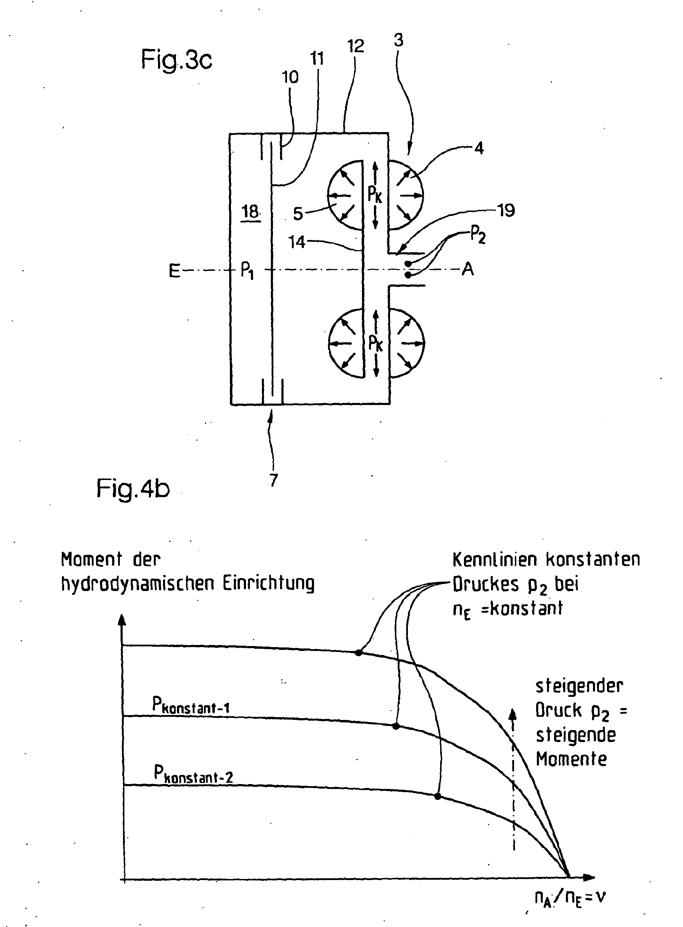

Zur Erläuterung der Steuerung der Leistungsübertragung im Einzelnen wird auf das Schema gemäß Figur 3c für die parallele Anordnung der Komponenten - hydrodynamische Kupplung und schaltbare Kupplung - verwiesen. Daraus ersichtlich sind das Pumpenrad 4, das Turbinenrad 5, die drehfest mit dem Pumpenrad 4 gekoppelte Pumpenradschale 12, der Kolben 14, welcher mit dem Turbinenrad 5 drehfest gekoppelt ist sowie die schaltbare Kupplung 7 mit einer ersten Kupplungsscheibe 10 und einer zweiten Kupplungsscheibe 11, welche mit dem Kolbenelement 14 gekoppelt ist. Der Druck p₁ ist der im ersten Betriebsmittelführungskanal-oder Raum 18 anliegende Druck, der Druck p₂ ist der im zweiten Betriebsmittelführungskanal- oder Raum 19 anliegende Druck. Als pₖ wird der Druck in der hydrodynamischen Kupplung 3 bezeichnet.

Die Drucksteuerung der hydrodynamischen Kupplung 3 ist durch Veränderung des Druckes p₂ gekennzeichnet. Durch Änderung von p₂ kann das Übertragungsvehalten der Kupplung 3 über große Bereiche bei konstanten Drehzahlen von Pumpenrad- und Turbienraddrehzahl beeinflußt werden.

Der Druck p₂ ist proportional zum Kreislaufdruck pₖ . Dieser ist abhängig vom Füllungsgrad. Ein steigender Füllungsgrad bedeutet dabei einen größeren Anteil des Betriebsmediums im Betriebsmittelumlauf, wodurch die Übertragungsfähigkeit steigt. Über den Druck p₂ bzw. die Druckdifferenz (p₂-pₖ) wird dabei der Füllungsgrad im hydrodynamischen Kreislauf beeinflußt und dieser wiederum beeinflußt den Kreislaufdruck pₖ.

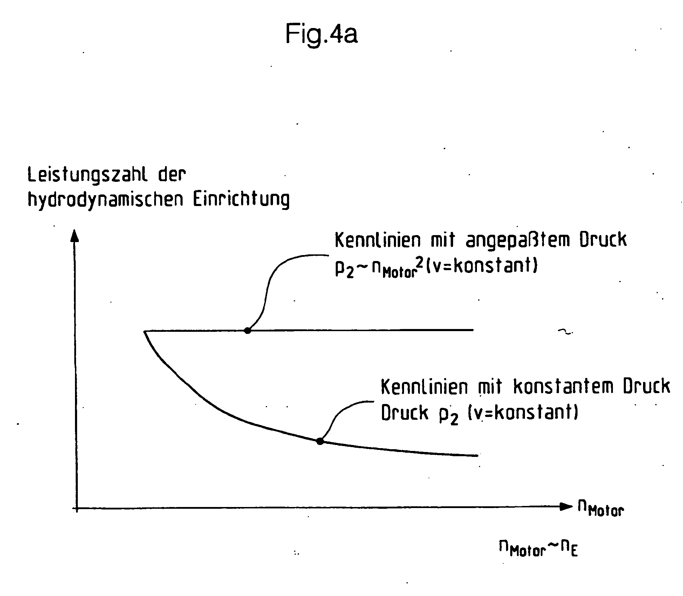

Eine weitere Einflußgröße für den Kreislaufdruck pₖ stellt die Primärraddrehzahl bzw. die Drehzahl der Antriebsmaschine dar. Der Kreislaufdruck pₖ steigt mit dem Quadrat der Motor- bzw. Antriebsdrehzahl an. Da im stationären Zustand pₖ proportional zu p₂ ist, paßt sich der Kreislaufdruck pₖ über den Füllungsgrad an den Druck p₂ an, d.h. der hydrodynamische Kreislauf im Arbeitsraum 6 geht bei konstantem Druck p₂ stärker in Teilfüllung über und die Übertragungsfähigkeit, ausgedrückt durch die Leistungszahl, fällt. Bei steigendem Druck und konstanter Drehzahl steigt auch die Übertragungsfähigkeit. Durch Anpassung der Größe des Druckes p₂ mit dem Quadrat der Motor- bzw. Antriebsdrehzahl n kann dieses Verhalten verändert werden, wie in Figur 4a verdeutlicht. Sind der Druck p₂ und die Antriebsdrehzahl konstant, überträgt die hydrodynamische Kupplung 3 bei einer variablen Abtriebsdrehzahl Momente entsprechend einer Kennlinie konstanten Druckes, wie in Figur 4b dargestell. Durch Veränderung des Druckes steigt oder fällt das übertragbare Moment auf eine andere Kennlinie konstanten Druckes, beispielsweise von pₖₒₙₛₜₐₙₜ₋₁ auf pₖₒₙₛₜₐₙₜ₋₂.

Die Drucksteuerung der schaltbaren Kupplung erfolgt durch beidseitige Druckbeaufschlagung des axial bewegbaren Kolbens 14. Die resultierende Axialkraft ergibt sich dabei aus der Druckdifferenz (p₂₋p₁) und den Flächenverhältnissen des Kolbens 14. Stellgröße zur Steuerung der übertragbaren Leistung über die schaltbare Kupplung ist daher die Druckdifferenz zwischen den Anschlüssen bzw. Betriebsmittelführungskanälen- oder Räumen 19 und 18.

Aus der Kombination beider Möglichkeiten zur Drucksteuerung der einzelnen Komponenten ergibt sich die Möglichkeit der Steuerung der Leistungsaufteilung auf beide Komponenten. Dabei fungiert p₂ als Stellgröße für die Drucksteuerung der hydrodynamischen Kupplung 3 und die Druckdifferenz (p₂-p₁) als Stellgröße zur Steuerung der Leistungsaufnahme der schaltbaren Kupplung 7.

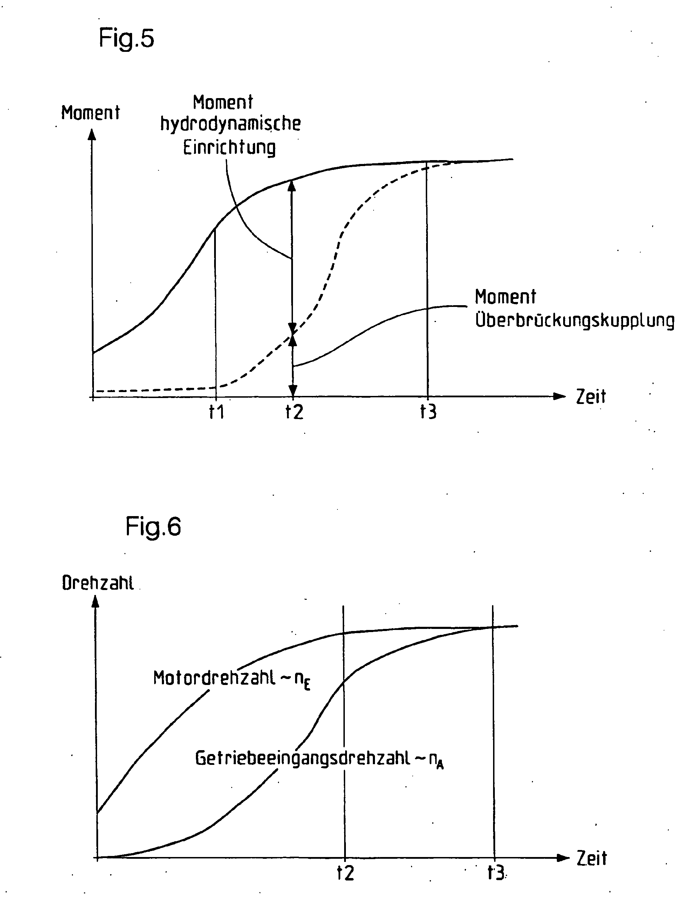

Figur 5 verdeutlicht dabei anhand eines Diagrammes den zeitlichen Verlauf einer möglichen Momentenaufteilung während des Betriebes der Anfahreinheit 1. Im Anfahrbereich beträgt dabei die über die hydrodynamische Kupplung übertragbare Leistung, bzw, das Moment nahezu 100% des Antriebsmomentes, hier bis etwa t1. Mit zunehmender Abtriebsdrehzahl, d.h. bei Koppelung der Anfahreinheit mit Nachschaltstufen der Getriebeeingangsdrehzahl kann dann die schaltbare Kupplung 7 über die Erhöhung der Druckdifferenz (p₂-p₁) dazu geschaltet werden, bis diese bei t3 im Synchronlauf von Antriebsdrehzahl, d.h. Drehzahl am Eingang der Anfahreinheit und Ausgang der Anfahreinheit das gesamte Moment überträgt. Durch Veränderung des Druckes p₂ kann zusätzlich das übetragene Moment der hydrodynamischen Kupplung 3 an die Erfordernisses des jeweiligen Fahrzustandes angepaßt werden. Der Zeitpunkt t2 charakterisiert einen Zeitpunkt mit gemeinsamer Leistungsübertragung.

Figur 6 verdeutlicht die diesen Vorgang charakterisierenden Kennlinien im Drehzahl-Zeit -Diagramm.

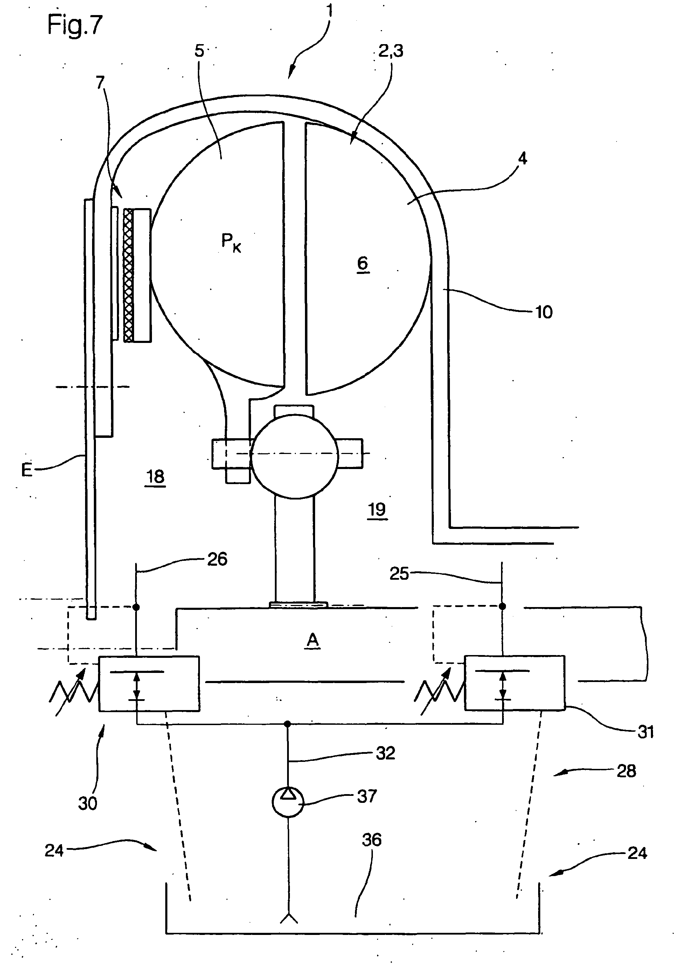

Figur 7 verdeutlicht demgegenüber eine besonders vorteilhafte Weiterentwicklung der Ausführung gemäß Figur 3a. Auch hier erfolgt die Kopplung der beiden Betriebsmittelführungskanäle - oder Räume 18 und 19 an eine Betriebsmittelversorgung 24 über ein offenes System 28 mit Verbindungsleitung 32 zur Betriebsmittelquelle 36, 37. Dabei ist jedem Betriebsmittelführungskanal- oder Raum 18 bzw. 19 bzw. dem Anschluß an diesen eine separat steuerbare Ventileinrichtung zugeordnet. Bei dieser Ventileinrichtung handelt es sich beispielsweise um ein Druckregelventil 30 und 31, wobei über die Vorgabe der in den Betriebsmittelkanälen bzw. Räumen 18 und 19 einzustellenden Druckwerte sowohl die Strömungsrichtung als auch die übertragbaren Leistungsanteile der hydrodynamischen Kupplung und der schaltbaren Kupplung festgelegt werden kann. Zusätzlich sind die über jede Kupplung - hydroydanamische Kupplung 3 und schaltbare Kupplung 7 - übertragbaren Leistungsanteile steuerbar, und zwar ohne gegenseitige Beeinflussung. Ein erster Leistungsanteil wird dabei bei parallelem Betrieb von hydrodynamischer Kupplung 3 und schaltbarer Kupplung 7 über den ersten Leistungszweig 9 übertragen, in welchem die hydrodynamische Kupplung angeordnet ist. Ein zweiter Leistungsanteil wird über einen zweiten Leistungszweig übertragen, in welchem die schaltbare Kupplung 7 angeordnet ist. Die Steuerung des ersten Leistungsanteiles erfolgt über die Steuerung des Absolutdruckes pₖ in der hydrodynamischen Kupplung 1. Als Stellgröße diesbezüglich fungiert der am ersten Betriebsmittelzufuhrkanal- oder Raum 19 über den Anschluß 25 anliegende Druck. Die Steuerung des zweiten Leistungsanteiles wird über den an den Anschlüssen 25 und 26 angelegten Differenzdruck realisiert.

Unter einem weiteren Aspekt umfaßt die Anfahreinheit 1 gemäß Figur 3a eine Vorrichtung zur Dämpfung von Schwingungen 33 insbesondere einen Torsionsschwingungsdämpfer. Dieser kann vielgestaltig ausgeführt sein. Im einfachsten Fall ist dieser als einfache Reibdämpfungseinrichtung ausgeführt. Es sind jedoch auch Ausführungen mit hydraulischer Dämpfung denkbar. Bezüglich der konkreten Ausgestaltung einer derartigen Vorrichtung zur Dämpfung von Schwingungen 33 kann auf die aus dem Stand der Technik bekannten Ausführungen verwiesen werden. Die konkrete Auswahl liegt dabei im Ermessen des zuständigen Fachmannes. Gemäß einer vorteilhaften Ausgestaltung sind dabei das hydrodynamische Bauelement, die hydrodynamische Kupplung 3, die schaltbare Kupplung 7 und die Vorrichtung 33 zur Dämpfung von Schwingungen in Reihe geschaltet. Die Vorrichtung zur Dämpfung von Schwingungen 33 umfaßt dabei ein Primärteil, welches drehfest mit dem Turbinenrad 3 verbunden ist und damit der zweiten Kupplungsscheibe 11 und ein Sekundärteil, welches drehfest mit dem Ausgang A gekoppelt ist. Zwischen Primärteil und Sekundärteil sind Mittel zur Dämpfungs- und/oder Federkopplung vorgesehen. Die Vorrichtung zur Dämpfung von Schwingungen 33 ist je nach Leistungsübertragungszweig bei der Leistungsübertragung über die hydrodynamische Kupplung 3 zwischen der hydrodynamischen Kupplung 3, insbesondere dem Turbinenrad 5 und dem Ausgang A angeordnet, des weiteren bei Leistungsübertragung über die schaltbare Kupplung 7 zwischen der schaltbaren Kupplung 7, insbesondere dem durch die zweite Kupplungsscheibe 11 gebildeten Ausgang und dem Ausgang A der Anfahreinheit 1. In beiden Fällen ist die Vorrichtung 33 zur Dämpfung von Schwingungen dem jeweils leistungsübertragenden Element - hydrodynamische Kupplung 3 oder schaltbare Kupplung 7 - in Reihe nachgeschaltet. Der übrige Grundaufbau der Anfahreinheit entspricht dem in den Figuren 3a und 3b beschriebenen. Für gleiche Elemente werden dabei die gleichen Bezugszeichen verwendet. Auch bei gleichzeitigem Betrieb von hydrodynamischer Kupplung 3 und schaltbarer Kupplung 7, d.h. Leistungsübertragung über zwei Leistungszweige - Übertragung eines ersten Leistungsanteiles der Gesamtleistung über die hydrodynamische Kupplung und Übertragung des zweiten Leistungsanteiles über die schaltbare Kupplung 7 - ist der Torsionsschwingungsdämpfer den beiden Leistungszweigen 8, 9 in Reihe nachgeschaltet.

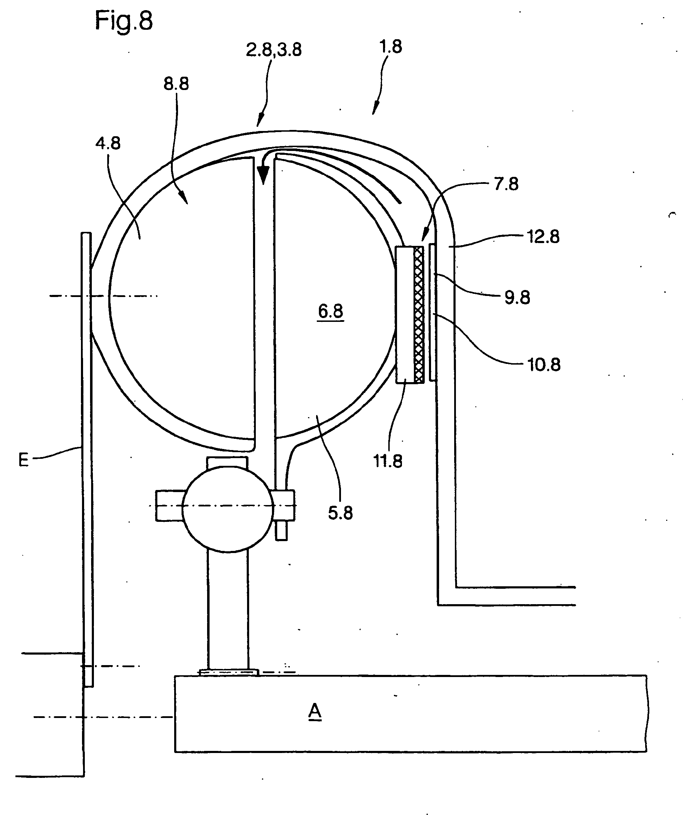

Die Figur 8 verdeutlicht in schematisch vereinfachter Darstellung eine weitere Ausgestaltung einer gestalteten Anfahreinheit 1.8 mit einem Anfahrelement 2.8 in Form einer hydrodynamischen Kupplung 3.8. Die hydrodynamische Kupplung 3.8 umfaßt auch hier ein Primärrad 4.8 und ein Sekundärrad 5.8, welche miteinander einen torusförmigen Arbeitsraum 6.8 bilden. Des weiteren ist auch hier eine schaltbare Kupplung 7.8 vorgesehen, welche parallel zur hydrodynamischen Kupplung schaltbar ist. Die Grundfunktion entspricht der in den Figuren 1 bis 7 beschriebenen. Für gleiche Elemente werden dabei auch die gleichen Bezugszeichen verwendet. Im Unterschied zur Ausführung gemäß Figur 1a ist jedoch das Pumpenrad 4.8 räumlich in axialer Richtung betrachtet zwischen dem Eingang E und dem Turbinenrad 5.8 angeordnet, d.h. das Turbinenrad 5.8 ist entgegen den Ausführungen der vorangegangenen Figuren nicht auf der Motorabtriebsseite, sondern auf der Motorseite angeordnet. Die Kopplung zwischen einem Antrieb, insbesondere dem Eingang E der Anfahreinheit 1.8 und dem Pumpenrad 4.8 erfolgt dabei unter Umschließung des Sekundärrades 5.8 in axialer Richtung.

### Bezugszeichenliste

- 1, 1.8: Anfahreinheit
- 2, 2.8: Anfahrelement
- 3, 3.8: hydrodynamische Kupplung
- 4, 4.8: Pumpenrad
- 5, 5.8: Turbinenrad
- 6, 6.8: Arbeitsraum
- 7, 7.8: schaltbare Kupplung
- 8, 8.8: erster Leistungszweig
- 9, 9.8: zweiter Leistungszweig
- 10, 10.8: erstes Kupplungselement
- 11, 11.8: zweites Kupplungselement
- 12, 12.8: Pumpenradschale
- 13: Mittel zur Erzeugung einer Anpreßkraft
- 14: Kolbenelement
- 15: Druckraum
- 16: Außenumfang des Turbinenrades
- 17: Innenumfang der Pumpenradschale
- 18: erster Betriebsmittelführungskanal - oder Raum
- 19: zweiter Betriebsmittelführungskanal - oder Raum
- 20: radial äußere Abmessung
- 21: Trennebene
- 22: Durchströmrichtungsänderungsmittel
- 23: Wegeventileinrichtung
- 24: Betriebsmittelversorgungssystem
- 25: Anschluß
- 26: Anschluß
- 27.1, 27.2: Verbindungsleitungen
- 28: offenes System
- 29.1: Druckbegrenzungsventil
- 30: Druckregelventil
- 31: Druckregelventil
- 32: Verbindungsleitung
- 33: Vorrichtung zur Dämpfung von Schwingungen
- 34: Stelleinrichtung
- 35: Stelleinrichtung
- 36: Behälter
- 37: Förderpumpe

## Patentansprüche

1. Verfahren zur Anpassung einer Anfahreinheit (1; 1.8) an Antriebsstränge mit unterschiedlichen Randbedingungen, wobei die Anfahreinheit einen mit einem Antrieb koppelbaren Eingang (E) und einen mit einem Abtrieb koppelbaren Ausgang (A), ein Anfahrelement (2; 2.8) in Form einer hydrodynamischen Kupplung, eine schaltbare Kupplung (7; 7.8), umfassend wenigstens zwei miteinander direkt oder indirekt über weitere Übertragungsmittel reibschlüssig in Wirkverbindung bringbare Kupplungselements - ein erstes Kupplungselement (10; 10.8) und ein zweites Kupplungselement (11; 11.8), die jeweils mit dem Eingang (E) und dem Ausgang (A) drehfest gekoppelt sind umfasst; wobei die hydrodynamische Kupplung (3; 3.8) und die schaltbare Kupplung (7; 7.8) parallel In zwei Leistungszweigen (8, 9) angeordnet und gemeinsam oder jeweils für sich allein schaltbar sind; die hydrodynamische Kupplung steuer und/oder regelbar ist; und der hydrodynamischen Kupplung ( 3;3.8) ein Betriebsmittelsystem (24) zugeordnet ist, das eine Betriebsmittelversorgungsquelle (36), einen ersten Anschluss (26) zur Kopplung mit einem ersten Betriebsmittelführungskanal- oder Raum (18) und einen zweiten Anschluss (25) zur Kopplung mit einem zweiten Betriebsmittelführungskanal- oder Raum (19) umfasst; und das Verfahren die folgenden Schritte umfasst:
- die Leistungsübertragung erfolgt wahlweise entweder Ober die hydrodynamische Kupplung (3; 3.8) oder die schaltbare Kupplung (7; 7.8) oder sowohl teilweise in einem ersten Leistungszweig (8) über die hydrodynamische Kupplung (3; 3.8) als auch in einem zweiten Leistungszweig (9) über die schaltbare Kupplung (7; 7.8); wobei
- der Anteil, der über die hydrodynamische Kupplung (3; 3.8) übertragbaren Leistung steuer- und/oder regelbar ist; und
- der Anteil, der über die schaltbare Kupplung (7; 7.8) übertragbaren Leistungen steuer- und/oder regelbar ist;
**dadurch gekennzeichnet, dass**
- der Anteil der über die hydrodynamische Kupplung (3; 3.8) übertragbaren Leistung unabhängig von der Leistungsübertragung über die schaltbare Kupplung (7; 7.8) gesteuert wird.

2. Verfahren gemäß Anspruch 1, **dadurch gekennzeichnet, dass** der über die hydrodynamische Kupplung (3; 3.8) übertragbare Leistunganteil durch Steuerung des Absolutdruckes im torusförmigen Arbeitsraum (6; 6.8) und der über die schaltbare Kupplung (7; 7.8) übertragbare Leistungsanteil durch Steuerung des Differenzdruckes zwischen den beiden Betriebsmittelführungskanälen- oder Räumen (18, 19) gesteuert wird.

## Claims

1. A method for adapting a starting unit (1; 1.8) to drive trains with differing boundary conditions, with the starting unit comprising an input (E) that can be coupled with a drive and an output (A) that can be coupled with a power take-off, a starting element (2; 2.8) in the form of a hydrodynamic coupling, a gear-shifting clutch (7; 7.8) comprising at least two clutch elements, a first clutch element (10; 10.8) and a second clutch element (11; 11.8), which can be brought in frictional operative connection with each other either directly or indirectly through further transmission means and which are each coupled with the input (E) and the output (A) in a torsionally rigid manner, with the hydrodynamic coupling (3; 3.8) and the gear-shifting clutch (7; 7.8) being arranged in parallel in two power branches (8, 9) and can be switched either jointly or each separately for themselves, the hydrodynamic coupling being controllable and/or adjustable, and the hydrodynamic coupling (3; 3.8) being associated with an operating medium system (24) which comprises an operating medium supply source (36), a first connection (26) for coupling with a first operating medium guide duct or chamber (18) and a second connection (25) for coupling with a second operating medium guide duct or chamber (19), and the method comprises the following steps:
- power transfer occurs optionally either via the hydrodynamic coupling (3; 3.8) or the gear-shifting clutch (7; 7.8), or both partly in a first power branch (8) via the hydrodynamic coupling (3; 3.8) and in a second power branch (9) via the gear-shifting clutch (7; 7.8),
- with the share of the power transmittable via the hydrodynamic coupling (3; 3.8) being controllable and/or adjustable, and
- the share of the powers transmittable via the gear-shifting clutch (7; 7.8) being controllable and/or adjustable,
- **characterized in that**
- the share of the power transmitted via the hydrodynamic coupling (3; 3.8) is controlled independently of the power transfer via the gear-shifting clutch (7; 7.8).

2. A method according to claim 1, **characterized in that** the share of power transmitted via the hydrodynamic coupling (3; 3.8) is controlled by controlling the absolute pressure in the toroidal working chamber (6; 6.8) and the share of the power transmitted via the gear-shifting clutch (7; 7.8) is controlled by controlling the differential pressure between the two operating medium guide ducts or chambers (18, 19).

## Revendications

1. Procédé pour adapter une unité de démarrage (1; 1.8) à des chaînes de transmission ayant des conditions aux limites différentes, dans lequel l'unité de démarrage comprend une entrée (E) pouvant être couplée à un entraînement et une sortie (A) pouvant être couplée à un côté de sortie, un élément de démarrage (2; 2,8) formé par un accouplement hydrodynamique, un accouplement embrayable (7; 7.8) comprenant au moins deux éléments de couplage pouvant être mis en liaison active par friction l'un avec l'autre, directement ou indirectement par l'intermédiaire d'autres moyens de transmission, à savoir un premier élément d'accouplement (10; 10.8) et un deuxième élément d'accouplement (11; 11.8), qui sont couplés de manière solidaire en rotation avec l'entrée (E) et la sortie (A) respectivement ; dans lequel l'accouplement hydrodynamique (3; 3.8) et l'accouplement embrayable (7; 7.8) sont disposés parallèlement dans deux branches de puissance (8, 9) et peuvent être embrayés ensemble ou chacun séparément, l'accouplement hydrodynamique peut être commandé et/ou régulé, et l'accouplement hydrodynamique (3; 3.8) étant associé à un système de moyen de fonctionnement (24) qui comprend une source d'alimentation en moyen de fonctionnement (36), un premier raccord (26) pour le couplage avec un premier canal ou espace d'acheminement du moyen de fonctionnement (18) et un deuxième raccord (25) pour le couplage avec un deuxième canal ou espace d'acheminement du moyen de fonctionnement (19), et le procédé comprend les étapes suivantes :
- la transmission de puissance s'effectue sélectivement soit par l'accouplement hydrodynamique (3; 3.8), soit par l'accouplement embrayable (7; 7.8) ou partiellement dans une première branche de puissance (8) par l'accouplement hydrodynamique (3; 3.8) et dans une deuxième branche de puissance (9) par l'accouplement embrayable (7; 7.8),
- la proportion de puissance qui peut être transmise par l'accouplement hydrodynamique (3; 3.8) pouvant être contrôlée et/ou régulée, et
- la proportion de puissance pouvant être transmise par l'accouplement embrayable (7; 7.8) pouvant être contrôlée et/ou régulée,
**caractérisé en ce que**
- la proportion de puissance qui peut être transmise par l'accouplement hydrodynamique (3; 3.8) est contrôlée en fonction de la transmission de puissance par l'accouplement embrayable (7; 7.8).

2. Procédé selon la revendication 1, **caractérisé en ce que** la proportion de puissance qui peut être transmise par l'accouplement hydrodynamique (3; 3.8) est contrôlée par le contrôle de la pression absolue dans l'espace de travail toroïdal (6; 6.8) et la proportion de puissance qui peut être transmise par l'accouplement embrayable (7; 7.8) est contrôlée par le contrôle de la pression différentielle entre les deux canaux ou espaces d'acheminement du moyen de fonctionnement (18, 19).
